(19) Europäisches Patentamt
European Patent Office
Office européen des brevets

(11) **EP 1 394 979 B1**

(12) **EUROPEAN PATENT SPECIFICATION**

(45) Date of publication and mention
of the grant of the patent:
**22.06.2011 Bulletin 2011/25**

(51) Int Cl.:
***H04L 1/00*** (2006.01)

(21) Application number: **03255435.4**

(22) Date of filing: **29.08.2003**

(54) **Method and apparatus for dynamically managing the packet segment threshold according to the state of the channel**

Verfahren und Gerät zur dynamischen Steuerung der Segmentierungsschwelle von Paketen abhängig von dem Kanalzustand

Procédé et appareil de contrôle dynamique de seuil pour la segmentation de paquets en fonction de l'état du canal

(84) Designated Contracting States:
**DE FR GB**

(30) Priority: **31.08.2002 KR 2002052288**

(43) Date of publication of application:
**03.03.2004 Bulletin 2004/10**

(73) Proprietor: **SAMSUNG ELECTRONICS CO., LTD.
Suwon-City, Kyungki-do (KR)**

(72) Inventors:
• **Jang, Kyung-hun
Paldal-gu,
Suwon-city,
Kyungki-do (KR)**

• **Hwang, Hyo-sun
Paldal-gu,
Suwon-city,
Kyungki-do (KR)**
• **Park, Jong-ae
Guseong-myeon
Yongin-city
Kyungki-do (KR)**

(74) Representative: **Anderson, James Edward George
Elkington and Fife LLP
Prospect House
8 Pembroke Road
Sevenoaks, Kent TN13 1XR (GB)**

(56) References cited:
**EP-A- 1 168 704     US-A- 4 841 526
US-A- 4 941 144**

**Description**

The present invention relates to a method of adjusting the size of a packet transmitted from a wireless communications system, and more particularly, to a method and an apparatus for dynamically managing a packet segment threshold, which are capable of reducing the frequency of packet transmission errors by monitoring the state of a wireless channel and dynamically varying the packet segment threshold depending on the wireless channel state.

In wired communications, communications channels are relatively stable in terms of operation. Therefore, segment threshold, transmission power, retransmission technique variables, and forward error correction (FEC) levels, which are used as system parameters, generally have fixed values. However, in terms of channel environment, wireless communications is quite different from wired communications. Therefore, if protocols that are used for wired communications are directly applied to wireless communications, a considerable amount of packet loss may occur depending on channel state. This is why wireless communications requires new protocols capable of flexibly and adaptively responding to the characteristics and state of a communications channel that may vary considerably at any moment

In a conventional wireless communications system, each access point (AP) determines the fixed packet segment threshold used by wireless terminals, with consideration of its corresponding frequency band and service area. Segment threshold, which indicates the maximum packet size when transmitting data on a packet-by-packet basis, directly affects transmission throughput, i.e., the amount of data transmitted from one place to another at any given period of time.

If the segment threshold for transmitting a packet is set high, packet overhead decreases. In this case, a better channel environment results in higher throughput, and a poorer channel environment results in greater data loss. Here, greater data loss indicates more frequent retransmission requests.

However, if the segment threshold is set low, packet overhead increases. In this case, a better channel environment results in lower throughput, and a poorer channel environment decreases the likelihood of data loss.

Therefore, in order to increase throughput and reduce data loss in a wireless communications environment, segment threshold needs to vary depending on the state of a wireless communications channel.

EP 1168704 A2 discloses an error-correcting communications method in which packets for which acknowledgement messages have not been received from a receiving terminal are retransmitted with a sequence counter. The sequence counter enables the receiving terminal to discard duplicate packets which were sent because of lost acknowledgement messages. The adjustment of packet size is not mentioned.

US 4,941,144 discloses a data transmission method in which packet size is adaptively varied in consideration of a bit error rates. In particular, the packet size is varied based on the number of times ("repetition number") a packet has been retransmitted before a receiving terminal acknowledges correct receipt of the packet, correct receipt being determined using a check bit signal within the packet

US 5862171 discloses as well a radio data communication system where the receiver's sensitivity is used to determine whether to change the data segment size.

The present invention aims to provide a reduction of packet transmission errors by monitoring the state of a wireless communications channel and dynamically varying Segment threshold according to a temporal and spatial channel state.

According to an aspect of the present invention, there is provided a method of managing packet segment threshold, which indicates the maximum packet size when transmitting data on a packet-by-packet basis, in a communications system, the method comprising:

determining whether or not a packet has been transmitted to a receiving terminal;
if it is determined that a packet has been transmitted to the receiving terminal, receiving from the receiving terminal a response message indicating that the receiving terminal has received the packet without any errors;
receiving signal intensity information of a current packet from the receiving terminal; and
dynamically adjusting the packet segment threshold using the received signal intensity information of the current packets if the response message has been received.

According to another aspect of the present invention, there is provided an apparatus which manages packet segment threshold, which indicates the maximum packet size when transmitting data on a packet-by-packet basis, in a communications system, the apparatus comprising:

a plurality of packet transmission result input units, each of which is adapted to receive a response message indicating that a packet has been successfully transmitted to a receiving terminal without any errors;
a plurality of received signal intensity input units, each of which is adapted to receive signal intensity information corresponding to a packet received by the receiving terminal;
a segment threshold adjustment unit which is adapted to dynamically calculate and adjust the packet segment threshold based on the signal intensity information of a current packet, if the response message has been received;

and

a segment threshold management unit which outputs packet segment threshold information for performing packet segmentation according to the packet segment threshold adjusted by the segment threshold adjustment unit.

In another aspect, there is provided a computer-readable recording medium on which a program arranged to perform the above-mentioned method is recorded.

The above and other features and advantages of the present invention will become more apparent by describing in detail exemplary embodiments thereof with reference to the attached drawings in which:

FIG. 1 is a graph illustrating a method of dynamically managing segment threshold according to a preferred embodiment of the present invention;

FIG. 2 is a block diagram of an apparatus for managing segment threshold according to a preferred embodiment of the present invention; and

FIG. 3 is a flowchart illustrating the operation of a segment threshold adjustment unit.

Hereinafter, the present invention will be described more fully with reference to the accompanying drawings in which preferred embodiments of the invention are shown.

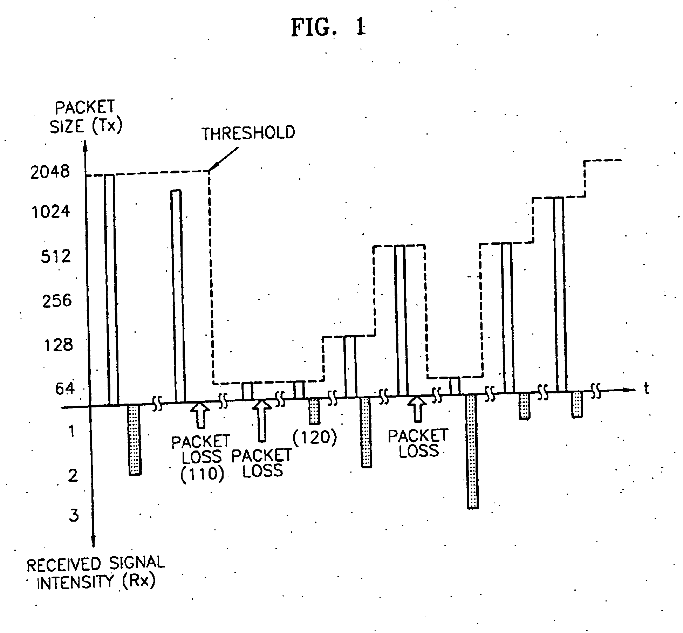

FIG. 1 is a graph illustrating a method of dynamically adjusting segment threshold according to a preferred embodiment of the present invention. More specifically, FIG. 1 is used as a reference in the following paragraphs, which describe a process of setting segment threshold to a predetermined value based on whether or not a response signal ACK has been received and based on the intensity of input signals. Data is transmitted after a predetermined value is set as the segment threshold. If packet loss occurs (110) during data transmission, a minimum segment threshold value provided in advance is set as the segment threshold. If no additional packet loss occurs, the segment threshold gradually increases.

If the intensity of a received packet signal is low (120), the extent to which the segment threshold gradually increases is small. On the other hand, if the intensity of the received packet signal is high, the extent to which the segment threshold gradually increases is adjusted using a predetermined method. This process determines the size of a packet transmitted by each terminal. Thus, each terminal is required to have a segment threshold adjustment unit for dynamically adjusting segment threshold and a segment threshold management unit for managing the segment threshold adjustment unit.

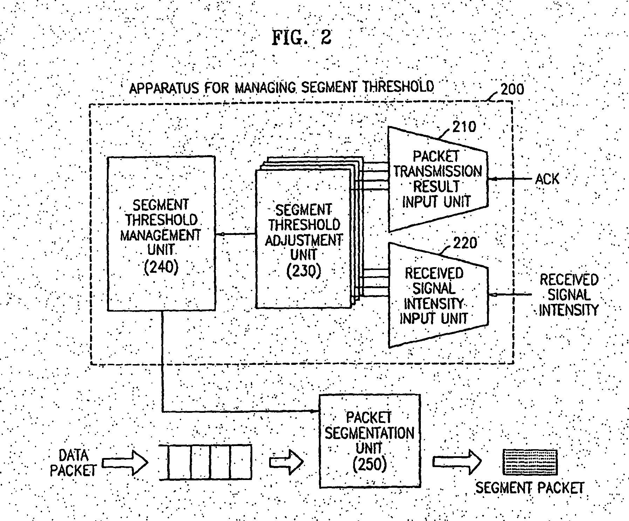

FIG. 2 is a block diagram of an apparatus for managing segment threshold according to a preferred embodiment of the present invention.

Segment threshold is adjusted depending on the intensity of an input signal and depending on whether a request is made for retransmitting a packet due to packet loss. Wireless communications terminals manage segment threshold according to their wireless communications channels' characteristics. Therefore, each wireless communications terminal requires a segment threshold adjustment unit 230. In addition, a segment threshold management unit 240, for managing the segment threshold adjustment unit 230, is also necessary. An apparatus including the segment threshold adjustment unit 230 and the segment threshold management unit 240 is called an apparatus for managing segment threshold 200.

An apparatus for managing segment threshold 200 according to the present invention includes a packet transmission result input unit 210, a received-signal intensity input unit 220, a segment threshold adjustment unit 230, and a segment threshold management unit 240. A packet segmentation unit 250 performs packet segmentation according to information input from the segment threshold management unit 240.

The packet transmission result input unit 210 receives an ACK message, which is a response signal generated by a destination terminal when a packet has been successfully received.

The received-signal intensity input unit 220 receives the intensity of all input packet signals.

The segment threshold adjustment unit 230 calculates a segment threshold value based on the input packet signal intensities received from the received-signal intensity input unit 220 and based on whether the ACK message has been received, and adjusts the segment threshold accordingly. The process of calculating a segment threshold value will be described more fully later in this disclosure.

The segment threshold management unit 240 manages the segment threshold value calculated and adjusted by the segment threshold adjustment unit 230 and transmits the segment threshold value to the packet segmentation unit 250. The packet segmentation unit 250 performs packet segmentation based upon the received segment threshold value. In other words, the segment threshold management unit 240 manages the segment threshold information from the segment threshold adjustment unit 230 and transmits the received segment threshold information to the packet segmentation unit 250. The packet segmentation unit 250 selects the segment threshold information of the destination terminal to which data is to be transmitted and performs packet segmentation based on the corresponding segment threshold information.

The packet segmentation unit 250 performs packet segmentation based on the segment threshold information received from the segment threshold management unit 240.

Each terminal receives the intensity of all packet signals input thereinto from the received-signal intensity input unit 220 and transmits the received intensity of all the input packet signals to the segment threshold adjustment unit 230. In addition, each terminal receives an ACK message from the packet transmission result input unit 210 and transmits information regarding packet loss to the segment threshold adjustment unit 230. The segment threshold adjustment unit 230 determines the segmentation threshold applied to each packet and the extent to which the segmentation threshold is to be increased.

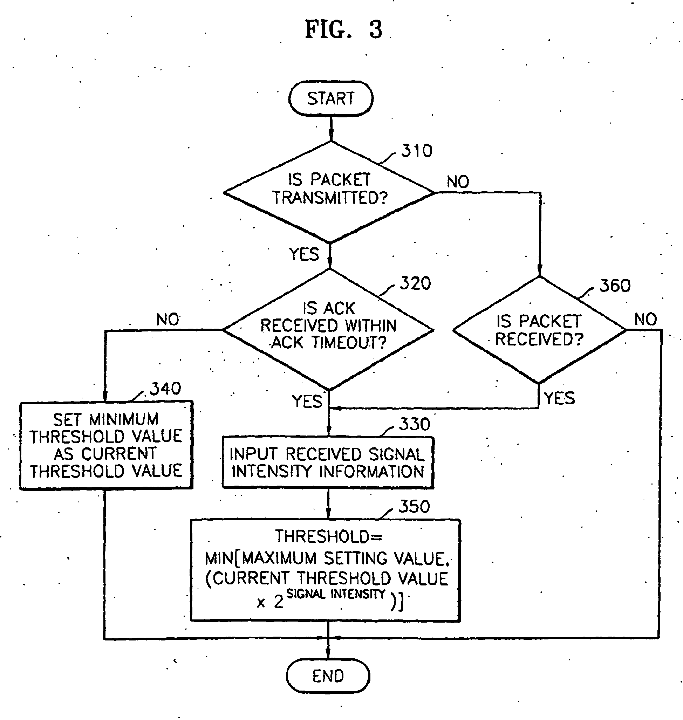

FIG. 3 is a flowchart illustrating the operation of the segment threshold adjustment unit 230. In step 310 of FIG. 3, it is determined whether or not a packet has been transmitted. If a packet has been transmitted, it is determined whether or not an ACK message has been received within an ACK timeout period, in step 320. If the ACK message has been received, then in step 330, the segment threshold adjustment unit monitors all input packet signals, receives input-signal intensity, and determines a signal intensity level Sig_Level. In other words, if the ACK message has been successfully received, the segment threshold adjustment unit increases the segment threshold depending on the signal intensity level Sig_Level in step 350. Supposing that Sig_level, Thres_value, and Max_Thres represent the signal intensity level, a current segment threshold value, and a maximum segment threshold value, respectively, the current segment threshold value Thres_value is calculated using Equation (1) below.

$$Thres\_value = \min[\,Max\_Thres, (Thres\_value \times 2^{Sig\_level})\,] \quad \cdots (1)$$

The state of a wireless communications channel can be successfully reflected into the segment threshold using Equation (1).

In step 340, if the ACK message, which is a signal generated in response to the transmitted packet, has not yet been received, it is determined that packet loss has occurred and the segment threshold is then decreased to a predetermined minimum value

In step 310 and 360, if no packet was transmitted but one was received, the method directly proceeds to step 330 where a signal intensity level is determined.

The embodiments of the present invention set forth herein can be written as a program that can be executed in a computer, and can be realized in a common digital computer with the help of a computer-readable recording medium.

The computer-readable recording medium includes a magnetic storage medium, such as ROM, a floppy disk, or a hard disk; an optical recording medium, such as CD-ROM, or a DVD; and a carrier wave, such as data transmission through the Internet.

According to the present invention, it is possible to dynamically vary the segment threshold value of each packet transmitted via a wireless communications channel according to the state of a wireless channel, which temporally and spatially varies. Therefore, it is possible to increase throughput, reduce the rate of packet loss and the number of packet retransmissions, and enhance the efficiency of the wireless communications channel.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1.  A method of managing the packet segment threshold, which indicates the maximum packet size for transmitting data on a packet-by--packet basis, in a communications system, the method comprising:

    determining whether or not a packet has been transmitted to a receiving terminal; (310);
    if it is determined that a packet has been transmitted to the receiving terminal, determining whether a response message is received from the receiving terminal the response message indicating that the receding terminal has received the packet without any errors (320);
    receiving signal intensity information of a current packet from the receiving terminal(330); and
    dynamically adjusting the packet segment threshold using the received signal intensity information of the current packet if the response message has been received (350) performing packet segmentation, by a segment threshold management unit (240), according to the packet segment threshold adjusted by the segment threshold adjustment unit (230).

**EP 1 394 979 B1**

2. The method of claim 1, wherein if it is determined that a packet has not been transmitted to the receiving terminal, it is determined whether or not a packet has been received by the receiving terminal (360).

3. The method of claim 1 or 2, wherein in the adjusting step, if a response message for the transmitted- packet is not received within a timeout period, it is determined that packet loss has occurred and the packet segment threshold is reduced to a predetermined setting value (340).

4. The method of claim 1 or 2, wherein in the adjusting step, if the received signal intensity information of the current packet has a value greater than a predetermined value, a packet segment threshold incremental rate is increased, and if the received input-signal intensity information of the current packet has a value less than the predetermined value, the packet segment threshold incremental rate is decreased.

5. The method of claim 1 or 2, wherein in the adjusting step, the packet segment threshold is adjusted depending on a packet segment threshold incremental rate which has been set in proportion to the received signal intensity data of the current packet.

6. The method of claim 1 or 2, wherein in the adjusting step, the packet segment threshold is set to a value between a predetermined maximum threshold value and a value obtained by multiplying a current packet segment threshold value by a value obtained by raising 2 to the power of the signal intensity level.

7. An apparatus which manages the packet segment threshold, which indicates the maximum packet size when transmitting data on a packet-by-packet basis, for a communications system, the apparatus comprising:

> a plurality of packet transmission result input units (210), each of which is adapted to receive a response message indicating that a packet has been successfully transmitted to a receiving terminal without any errors;
> a plurality of received signal intensity input units (220), each of which is adapted to receive signal intensity information corresponding to a packet received by the receiving terminal;
> a segment threshold adjustment unit (230) which is adapted to dynamically calculate and adjust-the packet segment threshold based on the signal intensity information of a current packet, if the response message has been received; and
> a segment threshold management unit (240) which outputs packet segment threshold information for performing packet segmentation according to the packet segment threshold adjusted by the segment threshold adjustment unit (230).

8. The apparatus of claim 7, wherein the segment threshold adjustment unit (230) is arranged to decrease the size of a transmission packet if the received signal intensity information has a value less than a predetermined value, and increase the size of the transmitted packet if the received signal intensity information has a value greater than the predetermined value.

9. The apparatus of claim 7, wherein the segment threshold adjustment unit (230) is arranged to decrease a size incremental rate for transmission packets if the received signal intensity information has a value less than a predetermined value, and increase the size incremental rate for transmission packets if the received signal intensity information has a value greater than the predetermined value.

10. The apparatus of claim 7, 8 or 9, wherein the segment threshold management unit (240) is arranged to select predetermined packet segment threshold information, corresponding to a target terminal to which data is to be transmitted from among packet segment threshold information input from the segment threshold adjustment unit (230), and output the predetermined packet segment threshold information so that a packet segmentation unit (250) can perform packet segmentation based on the predetermined packet segment threshold information.

11. A computer-readable recording medium on which a computer program arranged to perform the method of any of claims 1 to 6 is recorded.

**Patentansprüche**

1. Verfahren zum Steuern der Segmentierungsschwelle von Paketen, die die maximale Paketgröße zum paketweise Übertragen von Daten in einem Kommunikationssystem angibt, wobei das Verfahren umfasst:

Bestimmen, ob ein Paket zu einem Empfängeranschluss übertragen worden ist oder nicht (310), wenn bestimmt ist, dass ein Paket zu dem Empfängeranschluss übertragen worden ist, Bestimmen, ob vom Empfängeranschluss eine Antwortmitteilung empfangen ist, wobei die Antwortmitteilung angibt, dass der Empfängeranschluss das Paket ohne Fehler empfangen hat (320), Empfangen von Signalintensitätsinformationen eines vorliegenden Pakets vom Empfängeranschluss (330) und dynamisches Anpassen der Paketsegmentierungsschwelle unter Verwendung der empfangenen Signalintensitätsinformationen des vorliegenden Pakets, wenn die Antwortmitteilung empfangen worden ist (350), Durchführen einer Paketsegmentierung mit einer Steuerungseinheit (240) für Segmentierungsschwellen, gemäß der Paketsegmentierungsschwelle, die von einer Anpassungseinheit (230) für Segmentierungsschwellen angepasst ist.

2. Verfahren nach Anspruch 1, wobei, wenn bestimmt ist, dass kein Paket zum Empfängeranschluss übertragen worden ist, bestimmt wird, ob vom Empfängeranschluss ein Paket empfangen worden ist oder nicht (360).

3. Verfahren nach Anspruch 1 oder 2, wobei im Anpassungsschritt, wenn innerhalb einer Zeitbeschränkungsdauer keine Antworimitteilung für das übertragene Paket empfangen ist, bestimmt wird, dass ein Paketverlust aufgetreten ist und die Paketsegmentierungsschwelle auf einen vorgegebenen Sollwert verringert wird (340).

4. Verfahren nach Anspruch 1 oder 2, wobei im Anpassungsschritt, wenn die empfangenen Signalintensitätsinformationen des vorliegenden Pakets einen Wert größer als ein vorgegebener Wert aufweisen, eine Inkrementrate der Paketsegmentierungsschwelle erhöht wird, und wenn die empfangenen Signalintensitätsinformationen des vorliegenden Pakets einen Wert kleiner als den vorgegebenen Wert aufweisen, die Inkrementrate der Paketsegmentierungsschwelle gesenkt wird.

5. Verfahren nach Anspruch 1 oder 2, wobei im Anpassungsschritt die Paketsegmenüerungsschwelle in Abhängigkeit von einer Inkrementrate der Paketsegmentierungsschwelle angepasst wird, die im Verhältnis zu den empfangenen Signalintensitätsdaten des vorliegenden Pakets festgelegt worden ist.

6. Verfahren nach Anspruch 1 oder 2, wobei im Anpassungsschritt die Paketsegmentierungsschwelle auf einen Wert zwischen einem vorgegebenen maximalen Schwellenwert und einem Wert, der erhalten ist durch Multiplizieren eines vorliegenden Paketsegmentierungsschwellenwerts mit einem Wert, der durch Potenzierung von 2 mit dem Signalintensitätspegel erhalten ist, gesetzt wird.

7. Vorrichtung zum Steuern der Segmentierungsschwelle von Paketen, die die maximale Paketgröße zum paketweise Übertragen von Daten in einem Kommunikationssystem angibt, wobei die Vorrichtung umfasst:

eine Mehrzahl von Eingabeeinheiten (210) für Paketüberfragungsergebnisse, wobei jede dazu ausgebildet ist, dass sie eine Antwortmitteilung empfängt, die angibt, dass ein Paket erfolgreich ohne Fehler zu einem Empfängeranschluss übertragen worden ist, eine Mehrzahl von Eingabeeinheiten (220) für Empfangssignalintensitäten, wobei jede dazu ausgebildet ist, dass sie Signalintensitätsinformationen empfängt, die einem Paket zugeordnet sind, das vom Empfängeranschluss empfangen ist, eine Anpassungseinheit (230) für Segmentierungsschwellen, die dazu ausgebildet ist, dass sie Paketsegmentierungsschwellen basierend auf den Signalintensitätsinformationen eines vorliegenden Pakets dynamisch berechnet und anpasst, wenn die Antwortmitteilung empfangen worden ist, und eine Steuerungseinheit (240) für Segmentierungsschwellen, die Paketsegmentierungsschwelleninformationen zum Durchführen einer Paketsegmentierung gemäß der von der Anpassungseinheit (230) für Segmentierungsschwellen angepassten Paketsegmentierungsschwelle ausgibt.

8. Vorrichtung nach Anspruch 7, wobei die Anpassungseinheit (230) für Segmentierungsschwellen dazu ausgebildet ist, dass sie die Größe eines Übertragungspakets verringert, wenn die empfangenen Signalintensitätsinformationen einen Wert kleiner als ein vorgegebener Wert aufweisen, und die Größe des übertragenen Pakets erhöht, wenn die empfangenen Signalintensitätsinformationen einen Wert größer als der vorgegebene Wert aufweisen.

9. Vorrichtung nach Anspruch 7, wobei die Anpassungseinheit (230) für Segmentierungsschwellen dazu ausgebildet ist, dass sie eine Inkrementrate der Größe für Übertragungspakete verringert, wenn die empfangenen Signalintensitätsinformationen einen Wert kleiner als ein vorgegebener Wert aufweisen, und die Inkrementrate der Größe für Übertragungspakete erhöht, wenn die empfangenen Signalintensitätsinformationen einen Wert größer als der vorgegebene Wert aufweisen.

**10.** Vorrichtung nach Anspruch 7, 8 oder 9, wobei die Steuerungseinheit (240) für Segmentierungsschwellen dazu ausgebildet ist, dass sie vorgegebene Paketsegmentierungsschwelleninformationen, die einem Zielanschluss zugeordnet sind, an den Daten zu übertragen sind, aus Paketsegmentierungsschwelleninformationen auswählt, die von der Anpassungseinheit (230) für Segmentierungsschwellen eingegeben sind, und die vorgegebenen Paketsegmentierungsschwelleninformationen ausgibt, so dass eine Paketsegmentierungseinheit (250) eine Paketsegmentierung basierend auf den vorgegebenen Paketsegmentierungsschwelleninformationen durchführen kann.

**11.** Computerlesbares Aufzeichnungsmedium, auf dem ein Computerprogramm aufgezeichnet ist, das dazu ausgebildet ist, dass es das Verfahren nach einem der Ansprüche 1 bis 6 ausführt.

**Revendications**

**1.** Procédé de gestion du seuil de segment de paquet, qui indique la taille de paquet maximum pour transmettre des données sur une base paquet par parquet, dans un système de communication, le procédé consistant à :

déterminer si, oui ou non, un paquet a été transmis à un terminal de réception (310) ;
s'il est déterminé qu'un paquet a été transmis au terminal de réception, déterminer si un message de réponse est reçu du terminal de réception ;
le message de réponse indiquant que le terminal de réception a reçu le paquet sans erreurs (320) ;
recevoir des informations d'intensité de signal d'un paquet actuel du terminal de réception (330) ; et
ajuster dynamiquement le seuil de segment de paquet en utilisant les informations d'intensité de signal reçues du paquet actuel si le message de réponse a été reçu (350) ;
effectuer une segmentation de paquet, par une unité de gestion de seuil de segment (240), en fonction du seuil de segment de paquet ajusté par l'unité d'ajustement de seuil de segment (230).

**2.** Procédé selon la revendication 1, dans lequel, s'il est déterminé qu'un paquet n'a pas été transmis au terminal de réception, il est déterminé si, oui ou non, un paquet a été reçu par le terminal de réception (360).

**3.** Procédé selon la revendication 1 ou 2, dans lequel, à l'étape d'ajustement, si un message de réponse pour le paquet transmis n'est pas reçu dans une période de comptage, il est déterminé qu'une perte de paquet s'est produite et le seuil de segment de paquet est réduit à une valeur de réglage prédéterminée (344).

**4.** Procédé selon la revendication 1 ou 2, dans lequel, à l'étape d'ajustement, si les informations d'intensité de signal reçues du paquet actuel ont une valeur supérieure à une valeur prédéterminée, un taux incrémental de seuil de segment de paquet est augmenté, et si les informations d'intensité de signal d'entrée reçues du paquet actuel ont une valeur inférieure à la valeur prédéterminée, le taux incrémental de seuil de segment de paquet est diminué.

**5.** Procédé selon la revendication 1 ou 2, dans lequel, à l'étape d'ajustement, le seuil de segment de paquet est ajusté en fonction d'un taux incrémental de seuil de segment de paquet qui a été fixé proportionnellement aux données d'intensité de signal reçues du paquet actuel.

**6.** Procédé selon la revendication 1 ou 2, dans lequel, à l'étape d'ajustement, le seuil de segment de paquet est fixé à une valeur entre une valeur de seuil maximum prédéterminée et une valeur obtenue en multipliant une valeur de seuil de segment de paquet actuelle par une valeur obtenue en élevant 2 à la puissance du niveau d'intensité de signal.

**7.** Dispositif qui gère le seuil de segment de paquet, qui indique la taille de paquet maximum lors de la transmission de données sur une base paquet par paquet pour un système de communication, le dispositif comprenant :

une pluralité d'unités d'entrée de résultat de transmission de paquet (210), chacune d'elles étant conçue pour recevoir un message de réponse indiquant qu'un paquet a été transmis avec succès à un terminal de réception sans erreurs ;
une pluralité d'unités d'entrée d'intensité de signal reçu (220), chacune d'elles étant conçue pour recevoir des informations d'intensité de signal correspondant à un paquet reçu par le terminal de réception ;
une unité d'ajustement de seuil de segment (230) qui est conçue pour calculer et ajuster dynamiquement le seuil de segment de paquet sur la base des informations d'intensité de signal d'un paquet actuel, si le message de réponse a été reçu ; et

une unité de gestion de seuil de segment (240) qui délivre des informations de seuil de segment de paquet pour effectuer une segmentation de paquet en fonction du seuil de segment de paquet ajusté par l'unité d'ajustement de seuil de segment (230).

8. Dispositif selon la revendication 7, dans lequel l'unité d'ajustement de seuil de segment (230) est agencée pour diminuer la taille d'un paquet de transmission si les informations d'intensité de signal reçues ont une valeur inférieure à une valeur prédéterminée, et augmenter la taille du paquet transmis si les informations d'intensité de signal reçues ont une valeur supérieure à la valeur prédéterminée.

9. Dispositif selon la revendication 7, dans lequel l'unité d'ajustement de seuil de segment (230) est agencée pour diminuer un taux incrémental de taille pour la transmission de paquets si les informations d'intensité de signal reçues ont une valeur inférieure à une valeur prédéterminée, et augmenter le taux incrémental de taille pour la transmission de paquets si les informations d'intensité de signal reçues ont une valeur supérieure à la valeur prédéterminée.

10. Dispositif selon la revendication 7, 8 ou 9, dans lequel l'unité de gestion de seuil de segment (240) est agencée pour sélectionner des informations de seuil de segment de paquet prédéterminées, correspondant à un terminal cible auquel des données doivent être transmises, parmi des informations de seuil de segment de paquet provenant de l'unité d'ajustement de seuil de segment (230), et délivrer les informations de seuil de segment de paquet prédéterminées de sorte qu'une unité de segmentation de paquet (250) puisse effectuer une segmentation de paquet sur la base des informations de seuil de segment de paquet prédéterminées.

11. Support d'enregistrement pouvant être lu par un ordinateur sur lequel un programme d'ordinateur agencé pour effectuer le procédé selon l'une quelconque des revendications 1 à 6 est enregistré.

FIG. 1

PACKET
SIZE (Tx)

THRESHOLD

2048
1024
512
256
128
64

1
2
3

RECEIVED SIGNAL
INTENSITY (Rx)

PACKET
LOSS
(110)

PACKET
LOSS

(120)

PACKET
LOSS

t

9

## FIG. 2

APPARATUS FOR MANAGING SEGMENT THRESHOLD　200

SEGMENT
THRESHOLD
MANAGEMENT
UNIT
(240)

SEGMENT
THRESHOLD
ADJUSTMENT
UNIT
(230)

210

PACKET
TRANSMISSION
RESULT
INPUT UNIT ← ACK

220

RECEIVED
SIGNAL
INTENSITY
INPUT UNIT ← RECEIVED
SIGNAL
INTENSITY

DATA
PACKET ⇒ ⇒ PACKET
SEGMENTATION
UNIT
(250) ⇒ SEGMENT PACKET

EP 1 394 979 B1

# FIG. 3

START

310
IS PACKET
TRANSMITTED? — NO

YES

320
IS ACK
RECEIVED WITHIN
ACK TIMEOUT? — NO

360
IS PACKET
RECEIVED? — NO

YES

YES

340
SET MINIMUM
THRESHOLD VALUE
AS CURRENT
THRESHOLD VALUE

330
INPUT RECEIVED SIGNAL
INTENSITY INFORMATION

350
THRESHOLD=
MIN[MAXIMUM SETTING VALUE,
(CURRENT THRESHOLD VALUE
$\times 2^{SIGNAL\ INTENSITY}$)]

END

11

**EP 1 394 979 B1**

**REFERENCES CITED IN THE DESCRIPTION**

**Patent documents cited in the description**

- EP 1168704 A2
- US 4941144 A
- US 5862171 A